Europäisches Patentamt

European Patent Office

Office européen des brevets

(11) Publication number: **0 181 016**
**B1**

(12) **EUROPEAN PATENT SPECIFICATION**

(45) Date of publication of patent specification: **27.12.89**

(51) Int. Cl.⁴: **C 08 J 5/18, B 29 C 55/12, B 29 D 7/01 // B29K23/00**

(21) Application number: **85201538.7**

(22) Date of filing: **25.09.85**

(54) Thin films of high-molecular polyethylene and process for their preparation.

(30) Priority: **28.09.84 NL 8402963**

(43) Date of publication of application:
**14.05.86 Bulletin 86/20**

(45) Publication of the grant of the patent:
**27.12.89 Bulletin 89/52**

(84) Designated Contracting States:
**AT BE CH DE FR GB IT LI NL SE**

(56) References cited:
**EP-A-0 055 001**
**EP-A-0 064 167**
**EP-A-0 077 590**
**EP-A-0 115 192**
**US-A-4 344 908**
**US-A-4 422 993**
**US-A-4 430 383**

(73) Proprietor: **STAMICARBON B.V.**
**Mijnweg 1**
**NL-6167 AC Geleen (NL)**

(72) Inventor: **Burlet, Rudolf Johannes Hubertus**
**Wilderbeek 32**
**6166 HP Geleen (NL)**
Inventor: **Lemstra, Pieter Jan**
**Walcundusstraat 3**
**6444 TX Brunssum (NL)**

The file contains technical information submitted after the application was filed and not included in this specification

Courier Press, Leamington Spa, England.

## Description

The invention relates to films of low thickness with a high tensile strength and a high modulus on the basis of high-molecular polyethylene, and to a process for preparing such films.

It is known how to prepare polyethylene filaments having very high tensile strengths, for instance above 1.2 GPa, and moduli, for instance more than 20 GPa, on the basis of dilute solutions of a high-molecular linear polyethylene, see for instance US—A—4,344,908, US—A—4,422,993 and US—A—4,430,383. In these known processes a solution of at most 50% (wt), specifically 1—5% (wt), polyethylene with a weight-average molecular weight of at least $4 \times 10^5$, specifically at least $8 \times 10^5$, is spun through a spinning aperture at a temperature above the gelling temperature of the solution to form a filament, which is subsequently cooled to below the gelling temperature, upon which the gel filament formed in this process is stretched at elevated temperature, whether or not after removal of all or part of the solvent.

It is known also in such processes how to use spinning heads with slit-shaped dies instead of spinning heads with virtually round dies, producing tapes instead of round filaments, see for instance US—A—4,411,854 and US—A—4,436,689.

In the applicant's non-prepublished Netherlands patent application 8.402.964 a process is described for preparing polymer films with a high tensile strength and modulus on the basis of dilute solutions of high-molecular polymers via thermoreversible gelling followed by uniaxial stretching.

Although in these processes products are obtained having excellent mechanical properties, these processes are suitable almost exclusively for preparing relatively narrow products, the width of the product being determined by the width of, for instance, the spinning aperture, the opening in the extruder or the flow width of the intermediate gel product on a cooling roll. The preparation of very wide films is therefore not possible in these processes. Also, the preparation of ultra-thin films is virtually ruled out according to the said processes.

From EP—A—115.192 it is known how to prepare films, among other things, by dissolving a high-molecular polyethylene at elevated temperature in a paraffin wax which is solid at room temperature, extruding the solution and cooling and successively uniaxially stretching the extrudate. The disadvantage of that process is that a non-smooth product having a very high creep, and moreover, a high degree of opacity and porosity is obtained. Also the FEM value is relatively low (<150 KJ/m). In this application there is furthermore stated, without giving further particulars, that it is also possible to prepare biaxially stretched films by applying the said process.

The present invention now provides for very wide films of a high strength and modulus with extremely low thickness, on the basis of solutions of high-molecular polyethylene, which do not or hardly show the above disadvantages, and a process for preparing such films.

The present invention relates to smooth, glossy films based on linear polyethylene with a weight-average molecular weight of at least $4 \times 10^5$, having a tensile strength of at least 1 GPa, a modulus of at least 20 GPa, a FEM value as hereinafter defined, of at least 150 KJ/m, a thickness of at most 25 µm, an opacity of at most 15% and a water vapour transmission value, as hereinafter defined, of at most 0.6.

Particularly the invention relates to films wherein the weight-average molecular weight of the linear polyethylene amounts to at least $5 \times 10^5$, preferably at least $8 \times 10^5$, the tensile strength to at least 1.5 GPa, the modulus to at least 40 GPa, the thickness to at most 5 µm, preferably to at most 2 µm, the FEM value to at least 200 KJ/m, the opacity to at most 10%, and the water vapour transmission value to at most 0.5.

The invention further relates to a process for preparing such films, wherein a solution of a linear polyethylene with a weight-average molecular weight of at least $4 \times 10^5$ and with at least 50% (wt) of a solvent, which is liquid at room temperature, is transformed at elevated temperature into solvent-containing article, this article is converted by rapid cooling to below the gelling temperature into a gel article and this gel article is subjected at a temperature above 75° to biaxial stretching, whether or not after removal of all or part of the solvent, with a stretch ratio lengthwise and breadthwise of at least 3.

Biaxial stretching of polymers in the semi-solid phase is known in itself, for instance of polypropylene or polyvinylchloride, see inter alia 'Extrudierte Feinfolien und Verbundfolien' (1976) and 'Folien, Gewebe, Vliesstoffen aus Polypropylen' (1979) published by VDI-Verlag G.m.b.H. (Düsseldorf).

It is also known how to subject melted polyethylene to biaxial stretching, see for instance Journal of Applied Polymer Science, Vol. 29 (1984) pages 2347—2357.

In these known processes, however, it is not possible to prepare very thin to ultra-thin films with very high tensile strengths and moduli. Moreover, the products obtained via stretching in the semi-solid phase have been found to be relatively brittle.

The essence of the present invention is that a polyethylene gel article obtained via thermoreversible gelling is transformed by biaxial stretching into a smooth, glossy, very wide, extremely thin film having high strength, high toughness, high FEM-value, and low opacity and porosity.

In the present process a high-molecular linear polyethylene with a weight-average molecular weight of at least $4 \times 10^5$, particularly at least $5 \times 10^5$ and preferably at least $8 \times 10^5$ is started from. High-molecular linear polyethylene is here understood to mean polyethylene that may contain minor amounts, preferably at most 5 moles %, of one or more other alkenes copolymerized therewith, such as propylene, butylene, pentene, hexene, 4-methylpentene and octene, with fewer than 1 side chain per 100 carbon atoms, and preferably fewer than 1 side chain per 300 carbon atoms. The polyethylene may contain minor amounts, preferably at most 25% (wt), of one or more other polymers, in particular an alkene-1-polymer such as polypropylene, polybutylene or a copolymer of propylene with a minor amount of ethylene.

Here the polyethylene may contain substantial amounts of fillers. It may also be an advantage to use a polyethylene whose weight-average/number-average molecular weight ratio is lower than 5.

As the viscosity of the solution increases when the molecular weight of the polyethylene increases, so that it will be more difficult to process, generally no polyethylene with molecular weights higher than $15 \times 10^6$ will be used, although indeed the present process is feasible with higher molecular weights. The weight-average molecular weights can be determined according to known methods by gel permeation chromatography and light scattering.

The concentration of the polyethylene in the solution may vary, depending in part on the nature of the solvent and the molecular weight of the polyethylene and the applied method of transformation into an article.

Solutions with a concentration of more than 40% (wt) are rather difficult to deal with—particularly when using polyethylene with a very high molecular weight, for instance higher than $1 \times 10^6$—on account of the high viscosity that occurs. On the other side, the use of solutions with a concentration of, for instance, less than 0.5% (wt) has the disadvantage of a loss of yield and an increase in the costs of separating off and recovering solvent.

If the solution is to be transformed via spinning at elevated temperature, a polyethylene solution with a concentration between 2 and 20% (wt), specifically 2—15% (wt), will generally be started from.

If the solution is to be transformed via a profiled outlet of a kneader, for instance an extruder, in which this solution has been formed, higher concentrations can in principle be applied; generally 1—50% (wt), specifically 5—25% (wt).

The choice of the solvent is not critical. Any suitable solvent can be used, such as halogenated or non-halogenated hydrocarbons. In most solvents the polyethylene can be dissolved only at temperatures of at least 90°C. If the solution is to be transformed via spinning, this will generally be effected in a space under atmospheric pressure. Low-boiling solvents will then be less desirable, because they may evaporate from the articles so rapidly that they will act more or less as foaming agents and interfere with the structure hereof.

The transformation of the solution into a film-shaped or ribbon-shaped article can be carried out in various ways, e.g. spinning via a spinning head having a very wide slit die. Of course, instead of being spun the solution can also be poured out on for instance a belt or roll, be extruded, rolled out or calendered.

Another possibility is to add a finely divided high-molecular polyethylene and a solvent for this polyethylene in a weight ratio between 1:100 and 1:1, or a prepared suspension, to one end of a long kneader provided with one or more rotary screws, to subject the suspension mixture in it at elevated temperature for 0.5—30 minutes at a high throughput rate to mixing and kneading at high mechanical shear rates and to carry off the resulting mixture via an opening at the other end of the kneader into a gaseous or liquid cooling medium or onto a solid cooling surface while a highly stretchable gel article is being formed.

Under rapid cooling solutions of polyethylene materials will change into a gel below a critical temperature (gel point). In for instance spinning a solution must be used and the temperature must therefore be above this gel point.

During for instance the spinning the temperature of the solution is preferably at least 100°C and more specifically at least 120°C and the boiling point of the solvent is preferably at least 100°C and specifically at least equal to the transformation or spinning temperature. The solvent must not have a boiling point so high as to make it difficult for it to be evaporated from the films or ribbons obtained, and must be liquid at room temperature. Suitable solvents are aliphatic, cycloaliphatic and aromatic hydrocarbons with boiling points of at least 100°C, such as paraffins, toluene, xylenes, tetralin, decalin, $C_9$—$C_{12}$-alkenes or petroleum fractions, but also halogenated hydrocarbons, for instance monochlorobenzene, and other known solvents. On account of the low cost preference will mostly be given to non-substituted hydrocarbons, which also include hydrogenated derivatives of aromatic hydrocarbons.

The transformation temperature and the dissolution temperature must not be so high that substantial thermal decomposition of the polyethylene occurs. These temperatures will therefore generally not be chosen higher than 240°C.

The ribbon-shaped or film-shaped product obtained is cooled to below the gel point of the solution. This can be done in any suitable manner, for instance by passing the product into a liquid bath or through a shaft or by pouring it out on a cooling roll. During the cooling to below the gel point of the polyethylene solution the polyethylene forms a gel. A film or tape consisting of this polyethylene gel has enough mechanical strength to be processed further, for instance via guides, rolls and the like customary in the spinning technique.

The gel thus obtained is subsequently stretched. In this stretching operation the gel may still contain substantial amounts of solvent, up to amounts hardly lower than those present in the polyethylene solution. Also, before the stretching, part or indeed essentially all of the solvent may be removed from the gel, for instance by evaporation or by washing out with an extractant.

Preference is given to stretching the films or tapes at elevated temperature, specifically above 75°C. In this operation the stretching will preferably be done below the melting point or dissolution point of the polyethylene because above that temperature the mobility of the macromolecules will soon be so high that the desired orientation cannot be achieved or only to an insufficient degree. The intramolecular development of heat resulting from the stretching of the films or tapes must be taken into account. At high rates of stretching the temperature in the films or tapes may thus show a strong increase and care must be taken not to allow it to come near or, indeed, to exceed the melting point.

The films or tapes can be brought to the stretching temperature by passing them into a zone containing a gaseous or liquid medium, which zone is kept at the desired temperature. A tubular oven with air as gaseous medium is very suitable, but a liquid bath or any other appropriate device can be used also.

During the stretching (any) solvent present will be separated off from the film or tape. This is promoted preferably by appropriate measures, such as carrying off the solvent vapour by passing a hot gas or air stream along the film or tape in the stretching zone, or by stretching in a liquid bath comprising an extractant for the solvent, which extractant may optionally be the same as the solvent. The final film must be free of solvent and it is an advantage for the chosen conditions to be such that this state is reached already in the stretching zone, or at least virtually so.

Moduli (E) and tensile strengths (σ) are calculated by means of strength/elongation curves as determined at room temperature by means of an Instron Tensile Tester, at a testing speed of 10% per minute, and reduced to the original cross section of the film sample.

The FEM value is measured via the Instrumented Flat-Headed Falling-Dart Test, as described in Polymer Testing 2 (1981) pages 69—83. The water vapour transmission value is measured according to the standard method mentioned in Kunststoffe/Plastics 7/73, page 25.

In the present process the draw ratios may vary. Generally, the gel will be stretched lengthwise and breadthwise at least 3× and preferably 5 to 25×. In this operation the draw ratio may be the same lengthwise and breadthwise, or lengthwise a draw ratio may be applied higher than breadthwise. The lengthwise and breadthwise stretching may be done alternately, but preferably simultaneously.

The films according to the invention are suitable for many applications, for instance for packaging films, protective sheeting, substrates for adhesives, as well as for cutting into very thin ribbons or tapes. In view of the extremely low thicknesses of the films that can be prepared according to the invention, for instance $\leqslant 1$ µm,

and their low porosity, the films are very suitable to be used as insulating films in condensers.

If so desired, minor amounts of the usual additives, stabilizers, fibre-treating agents and the like can be incorporated in or on the films, specifically amounts of 0.1—10% (wt) in respect of the polyethylene.

The invention is further elucidated in the following examples without, however, being limited by these.

Example I

A 5% (wt) solution in decalin of high-molecular linear polyethylene (Hostalen®GUR 412 of Ruhrchemie/Hoechst) with a weight-average molecular weight of about $1.5 \times 10^6$ was poured out at 175—180°C through a slit-shaped aperture into a cooled box where the film was released of solvent by air being passed along. The non-transparent gel film formed (about 20 cm long, 20 cm wide and 100 µm thick) was stretched 7× both lengthwise and breadthwise at 125°C to form a film having a length and width of about 140 cm and a thicknes about 2 µm.

The thin, smooth and glossy film formed was found to show a strength of 1.5 GPa and a modulus of 42 GPa. The FEM value was about 200 KJ/m. The tension at break was about 0.2 GPa.

The opacity was about 9%.

(Cf.: The FEM value of LDPE blown film is about 30 KJ/m).

Examples II—IV

The process of Example I was repeated, but with a 1, 3 and 8% (wt) solution of Hostalen®GUR 412 in decalin.

The results found were virtually the same as those of Example I.

Examples V—VIII

The process of Example 1 was repeated, but with a 1, 3, 5 and 8% (wt) solution in decalin of a polyethylene grade Hifax-1900® (Hercules) with a weight-average molecular weight of $2 \times 10^6$.

The FEM values found were 200—220 KJ/m.

Example IX

The process of Example I was repeated on the understanding that a gel film 10 cm long, 10 cm wide and 50 µm thick was stretched 10× lengthwise and breadthwise at about 130°C.

The FEM value of the ultra-thin film formed (100 cm long, 100 cm wide and less than 1 µm thick) was about 240 KJ/m, the strength about 1.6 GPa and the modulus about 45 GPa.

Example X

The process of Example I was repeated, but this time with a 15% (wt) solution of Hifax-1900® in decalin, obtained in a twin-screw extruder of the ZSK type of the firm of Werner and Pfleiderer. The solution was poured out via a slit-shaped aperture in the extruder and further treated as in Example I.

The FEM value of the film product formed was 220 KJ/m, the strength about 1.7 GPa and the modulus about 50 GPa.

Example XI

A 5% (wt) solution of Hostalen®GUR 412 in decalin (Temperature: 180°C) was poured out via a slit-shaped aperture onto a cooling roll with formation of a film-shaped article of a width of about 60 cm. The film was passed through an extraction bath of dichloroethane, upon which the gel film formed (width 60 cm, thickness about 80 μm) was stretched lengthwise about 10× and breadthwise about 8× at about 125°C.

The FEM value of the film formed (about 1 μm thick) was 230 KJ/m. The other values were virtually the same as in Example I.

## Claims

1. A smooth, glossy film based on high molecular weight, linear polyethylene of combined high tensile strength, high modulus, high FEM-value, and low thickness, low opacity and low water vapour transmission value, wherein said weight average molecular weight is at least $4 \times 10^5$, said tensile strength is at least 1 GPa, said modulus is at least 20 GPa, said FEM value, as herein before defined, is at least 150 KJ/m, said thickness is at most 25 μm, said opacity is at most 15%, and said water vapour transmission value, as herein before defined, is at most 0.6.

2. A film according to claim 1, wherein said weight average molecular weight is at least $5 \times 10^5$, and said thickness is at most 5 μm.

3. A film according to claim 1 or 2, wherein said weight average molecular weight is at least $8 \times 10^5$, said tensile strength is at least 1.5 GPa, said modulus is at least 40 GPa, said FEM value is at least 200 KJ/m, said thickness is at most 2 μm, said opacity is at most 10%, and said water vapour transmission value is at most 0.5.

4. A spun and biaxially stretched film according to claims 1—3.

5. Process for preparing a film according to claims 1—3, which comprises transforming a solution of a linear polyethylene having a weight average molecular weight of at least $4 \times 10^5$ with at least 50% (wt) of a solvent which is liquid at room temperature, at elevated temperature into a solvent-containing article, converting this article by rapid cooling to below the gelling temperature into a gel article, and subjecting this gel article at a temperature above 75°C to biaxial stretching, whether or not after removal of all or part of the solvent, with a stretch ratio lengthwise and breadthwise of at least 3.

6. Process according to claim 5, characterized in that a 2—20% (wt) solution of a high-molecular polyethylene is spun at a temperature above the gelling temperature of the solution into a ribbon-shaped or film-shaped article.

7. Process according to claim 5, characterized in that a 1—50% (wt) solution of a high-molecular polyethylene obtained in a single or twin-screw extruder is transformed direct, via a slit-shaped die in said extruder, into a ribbon-shaped or film-shaped article at a temperature above the gelling temperature of the solution.

8. Process according to any one of claims 5—7, characterized in that the stretch ratio applied lengthwise is between 5 and 25 and breadthwise between 5 and 25, the stretch ratio lengthwise being equal to or higher than the stretch ratio breadthwise.

9. Process according to any one of claims 5—8, characterized in that the gel article is stretched lengthwise and breadthwise simultaneously.

## Patentansprüche

1. Glatte, glänzende Folie auf Basis eines hochmolekularen linearen Polyäthylens mit kombinierter hoher Zugfestigkeit, hohem Modul, hohem FEM-Wert und niedriger Dicke, niedriger Opazität und niedrigem Wasserdampftransmissionswert, worin das gewichtsmittlere Molgewicht mindestens $4 \times 10^5$, die Zugfestigkeit mindestens 1 GPa, der Modul mindestens 20 GPa, der FEM-Wert, wie oben definiert, mindestens 150 kJ/m, die Dicke höchstens 25 μm, die Opazität höchstens 15% und der Wasserdampftransmissionswert, wie oben definiert, höchstens 0,6 betragen.

2. Folie nach Anspruch 1, worin das gewichtsmittlere Molgewicht mindestens $5 \times 10^5$ und die Dicke höchstens 5 μm betragen.

3. Folie nach Anspruch 1 oder 2, worin das gewichtsmittlere Molgewicht mindestens $8 \times 10^5$, die Zugfestigkeit mindestens 1,5 GPa, der Modul mindestens 40 GPa, der FEM-Wert mindestens 200 kJ/m, die Dicke höchstens 2 μm, die Opazität höchstens 10% und der Wasserdampftranmissionswert höchstens 0,5 betragen.

4. Gesponnene und biaxial gestreckte Folie nach den Ansprüchen 1 bis 3.

5. Verfahren zum Herstellen einer Folie nach den Ansprüchen 1 bis 3, das das Umwandeln einer Lösung eines linearen Polyäthylens mit einem gewichtsmittleren Molgewicht von mindestens $4 \times 10^5$ mit mindestens 50% (Gew.) eines Lösungsmittels, das bei Raumtemperatur flüssig ist, bei erhöhter Temperatur in einen lösungsmittelhaltigen Gegenstand, das Umwandeln diese Gegenstandes durch rasches Abkühlen auf unterhalb Gelierungstemperatur in einen Gelgegenstand und das biaxiale Strecken dieses Gelgegenstandes bei einer Temperature über 75°C, gegebenenfalls nach Entfernung des gesamten Lösungsmittels oder eines Teiles hievon, mit einem Streckverhältnis der Länge und der Breite nach von mindestens 3 umfaßt.

6. Verfahren nach Anspruch 5, dadurch gekennzeichnet, daß eine 2 bis 20 %ige (Gew.) Lösung eines hochmolekularen Polyäthylens bei einer Temperatur oberhalb Gelierungstemperatur der Lösung zu einem band- oder folienförmigen Gegenstand gesponnen wird.

7. Verfahren nach Anspruch 5, dadurch gekennzeichnet, daß eine 1 bis 50 %ige (Gew.) Lösung eines hochmolekularen Polyäthylens, erhalten in einem Ein- oder Doppelschneckenextruder, durch eine schlitzförmige Düse im Extruder bei einer Temperatur oberhalb der Gelierungstemperatur der Lösung direkt in einen band- oder folienförmigen Gegenstand umgewandelt wird.

8. Verfahren nach einem der Ansprüche 5 bis 7, dadurch gekennzeichnet, daß das der Länge nach angewandte Streckverhältnis 5 bis 25 und das der Breite nach angewandte Streckverhältnis 5 bis 25 betragen, wobei das Streckverhältnis der Länge nach gleich oder höher als das Streckverhältnis der Breite nach ist.

9. Verfahren nach einem der Ansprüche 5 bis 8, dadurch gekennzeichnet, daß der Gelgegenstand der Länge und der Breite nach gleichzeitig gestreckt wird.

**Revendications**

1. Pellicule lisse et brillante formée d'un polyéthylène linéaire de masse moléculaire élevée présentant en combinaison des valeurs élevées de résistance à la traction, de module, d'indice FEM et aussi une faible épaisseur, une faible opacité et une faible valeur de transmission de vapeur d'eau, dans laquelle ladite masse moléculaire moyenne en poids est d'au moins $4 \times 10^5$, ladite résistance à la traction est d'au moins 1 GPa, ledit module est d'au moins 20 GPa, ledit indice FEM, tel que défini plus haut, est d'au moins 150 kJ/m, ladite épaisseur ne dépasse pas 25 μm, ladite opacité ne dépasse pas 15%, et ladite valeur de transmission de vapeur d'eau, telle que définie plus haut, est au maximum de 0,6.

2. Pellicule selon la revendication 1, dans laquelle ladite masse moléculaire moyenne en poids est d'au moins $5 \times 10^5$ et ladite épaisseur ne dépasse pas 5 μm.

3. Pellicule selon la revendication 1 ou 2, dans laquelle ladite masse moléculaire moyenne en poids est d'au moins $8 \times 10^5$, ladite résistance à la traction est d'au moins 1,5 GPa, ledit module est d'au moins 40 GPa, ledit indice FEM est d'au moins 200 kJ/m, ladite épaisseur ne dépasse pas 2 μm, ladite opacité ne dépasse pas 10%, et ladite valeur de transmission de vapeur d'eau ne dépasse pas 0,5.

4. Pellicule filée et biaxialement étirée selon les revendications 1 à 3.

5. Procédé de préparation d'une pellicule selon les revendications 1 à 3, qui consiste à transformer une solution d'un polyéthylène linéaire ayant une masse moléculaire moyenne en poids d'au moins $4 \times 10^5$ avec au moins 50% en poids d'un solvant qui est liquide à la température ambiante, à une température élevée en un article contenant du solvant, à convertir cet article par refroidissement rapide au dessous de la température de gélification en un article de gel et à soumettre cet article de gel à une température au dessus de 75°C à un étirage bi-axial avec ou sans élimination préalable de la totalité ou d'une partie du solvant, avec un rapport d'étirage dans le sens de la longueur et dans le sens de la largeur d'au moins 3.

6. Procédé selon la revendication 5, caractérisé en ce qu'on file une solution de 2 à 20% en poids d'un polyéthylène de haute masse moléculaire à une température supérieure à la température de gélification de la solution en un article en forme de ruban ou en forme de pellicule.

7. Procédé selon la revendication 5, caractérisé en ce qu'on transforme directement une solution de 1 à 50% en poids d'un polyéthylène de haute masse moléculaire obtenu dans une extrudeuse à vis unique ou à vis jumelées à travers une filière en forme de fente dans ladite extrudeuse, en un article en forme de ruban ou de pellicule à une température au dessus de la température de gélification de la solution.

8. Procédé selon l'une quelconque des revendications 5 à 7, caractérisé en ce que le rapport d'étirage dans le sens de la longueur est compris entre 5 et 25 et dans le sens de la largeur il est comprise entre 5 et 25, le rapport d'étirage dans le sens de la longueur étant égal ou supérieur au rapport d'étirage dans le sens de la largeur.

9. Procédé selon l'une quelconque des revendications 5 à 8, caractérisé en ce qu'on étire simultanément dans le sens de la longueur et le sens de la largeur l'article en gel.